## Europäisches Patentamt
## European Patent Office
## Office européen des brevets

(11) Numéro de publication: **0 153 886**
**B1**

(12) # FASCICULE DE BREVET EUROPÉEN

(45) Date de publication du fascicule du brevet:
12.07.89

(51) Int. Cl.⁴: **G 11 B 5/127**, G 11 B 5/31

(21) Numéro de dépôt: **85400135.1**

(22) Date de dépôt: **28.01.85**

(54) **Procédé de fabrication d'une tête magnétique pour enregistrement perpendiculaire.**

(30) Priorité: **03.02.84 FR 8401880**

(43) Date de publication de la demande:
**04.09.85 Bulletin 85/36**

(45) Mention de la délivrance du brevet:
**12.07.89 Bulletin 89/28**

(84) Etats contractants désignés:
**BE CH DE FR GB IT LI NL**

(56) Documents cité:
**EP-A-0 031 216**
**GB-A-2 092 807**
**US-A-4 078 300**

**JOURNAL OF APPLIED PHYSICS, vol. 53, no. 3, partie II, mars 1982, pages 2593-95, American Institute of Physics, New York, US; M. OSHIKI et al.: "A thin film head for perpendicular magnetic recording"**
**PATENTS ABSTRACTS OF JAPAN, vol. 4, no. 18 (E-171), 13 février 1980, page 35 E 171; & JP - A - 54 157 613 (FUJITSU K.K.) 12-12-1979**
**PATENTS ABSTRACTS OF JAPAN, vol. 5, no. 146 (P-80) 818, 16 septembre 1981; & JP - A - 56 80 814 (FUJITSU K.K.) 02-07-1981**
**PATENTS ABSTRACTS OF JAPAN, vol. 6, no. 252 (P-161) 1130, 10 décembre 1982; & JP - A - 57 147 117 (SONY K.K.) 10-09-1982**

(73) Titulaire: **COMMISSARIAT A L'ENERGIE ATOMIQUE, 31/33, rue de la Fédération, F-75015 Paris (FR)**

(72) Inventeur: **Lazzari, Jean- Pierre, 45, Chemin de Malanot, F-38700 Corenc (FR)**

(74) Mandataire: **Mongrédien, André, c/o BREVATOME 25, rue de Ponthieu, F-75008 Paris (FR)**

(56) Documents cité: (suite)
**PATENTS ABSTRACTS OF JAPAN, vol. 3, no. 56 (E-110), 15 mai 1979, page 14 E 110; & JP - A - 54 34 219 (CANON K.K.) 13-03-1979**
**PATENTS ABSTRACTS OF JAPAN, vol. 6, no. 46 (P-107) 924, 24 mars 1982; & JP - A - 56 163 517 (FUJITSU K.K.) 16-12-1981**
**PATENTS ABSTRACTS OF JAPAN, vol. 8, no. 68 (P-264) 1505, 30 mars 1984; & JP - A - 58 215 713 (FUJITSU K.K.) 15-12-1983**

**Description**

La présente invention a pour objet un procédé de fabrication d'une tête magnétique pour enregistrement perpendiculaire. L'invention trouve une application dans les équipements de mémoires d'ordinateur.

Une tête magnétique pour enregistrement perpendiculaire comprend, en général, un enroulement conducteur disposé sur un support magnétique, lequel possède une pièce polaire principale disposée au centre de l'enroulement. Une couche magnétique mince prolonge cette pièce polaire et vient affleurer à la surface de la tête. Cette couche est tenue entre deux plaques minces qui l'enserrent.

Une telle tête est décrite par exemple dans la demande de brevet européen 0 031 216 déposée le 11 décembre 1980 pour "A magnetic head for a perpendicular magnetic recording system" et publiée le 1er juillet 1981.

Un procédé connu de réalisation d'une telle tête consiste, à partir de deux éléments en forme de plaque, à insérer entre ces deux éléments une mince couche magnétique. L'ensemble est alors soudé. La pièce obtenue est ensuite rapportée sur un substrat, qui comprend la pièce polaire principale et son enroulement; le tout est à nouveau collé.

On conçoit qu'un tel procédé de réalisation soit délicat à mettre en oeuvre et peu apte à être automatisé ou même industrialisé. Par ailleurs, la plaque avant insérant la couche magnétique qui va servir de pôle d'écriture et de lecture, va présenter une certaine épaisseur, pour des raisons de facilité de manutention. Il en résulte que le pôle est allongé (puisque sa longueur est égale à l'épaisseur de la lame); l'efficacité de la tête est donc réduite.

La présente invention a pour objet un procédé qui remédie à ces inconvénients. A cette fin, elle propose un procédé qui fait appel à des opérations de dépôts de couches minces, ce qui permet de réaliser une tête magnétique dans des conditions de précision et de reproductibilité bien meilleures que dans l'art antérieur. Par ailleurs, la tête possède une meilleure efficacité du fait des dimensions réduites du pôle.

De façon précise, l'invention a pour objet un procédé de fabrication d'une tête magnétique d'écriture et de lecture pour enregistrement perpendiculaire, caractérisé en ce qu'il comporte les opérations suivantes:

- dépôt d'une couche en matériau magnétique sur un support isolant,
- gravure dans la couche magnétique d'une première tranchée large, fermée, laissant intacte une partie centrale allongée ayant un axe rectiligne,
- réalisation d'un bobinage dans la tranchée, ce bobinage entourant la partie centrale et étant isolé électriquement par une couche diélectrique,
- dépôt d'une couche d'un premier matériau diélectrique dur isolant sur le bobinage et la partie centrale,
- gravure dans cette couche d'une seconde tranchée comportant un bord latéral plan parallèle à l'axe de la partie centrale et en regard de celui-ci, cette seconde tranchée découvrant partiellement la partie centrale,
- dépôt, sur la couche en diélectrique dur et dans la seconde tranchée d'une couche magnétique mince,
- gravure de cette couche magnétique mince pour ne laisser subsister que la partie déposée sur le bord latéral de la seconde tranchée,
- comblement de la seconde tranchée par un second matériau diélectrique dur semblable au premier.

D'autres caractéristiques et avantages de l'invention ressortiront mieux de la description qui va suivre, donnée à titre illustratif mais nullement limitatif, en référence aux figures annexées sur lesquelles:

- les figures 1 à 7 montrent les principales étapes du procédé de l'invention,
- la figure 8 montre une vue de dessus de la tranchée.
- la figure 9 montre une vue de dessus éclatée de la tête obtenue selon l'invention,
- la figure 10 montre une coupe schématique de la tête à l'écriture ou à la lecture.

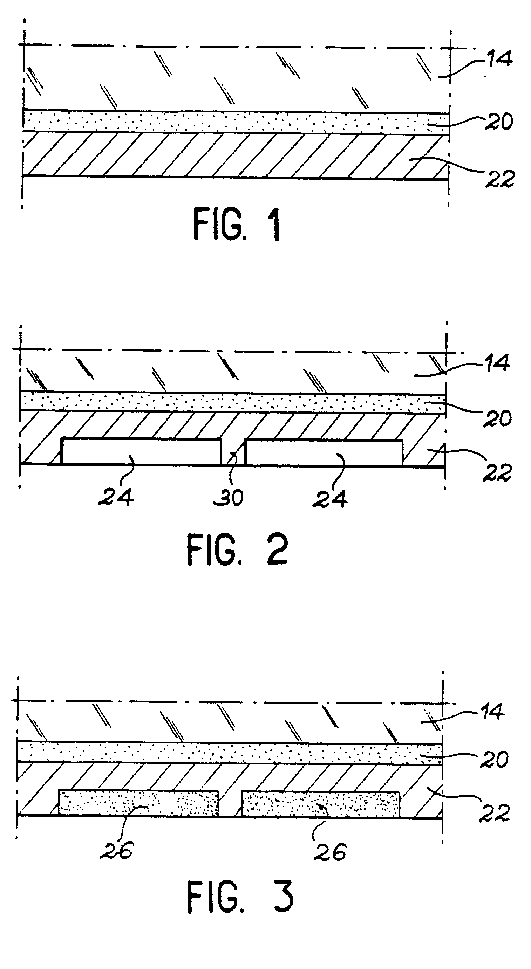

Le support diélectrique 14 représenté sur la figure 1 est une céramique, ou tout autre matériau isolant. Dans un mode préféré de l'invention, il s'agit d'une plaquette de silicium; ce support est revêtu d'une couche de silice 20 obtenue par oxydation thermique.

On dépose ensuite sous vide, ou par tout autre moyen adéquat, une couche magnétique 22 qui doit présenter une forte aimantation et une forte perméabilité. Différents types de ferrites tels que MnZn, NiZn, ou d'alliages tels que FeNi, ou de matériaux magnétiques amorphes tels que CoZr, peuvent être utilisés. L'épaisseur de la couche magnétique 22 est de l'ordre de 0,5 micron à quelques microns.

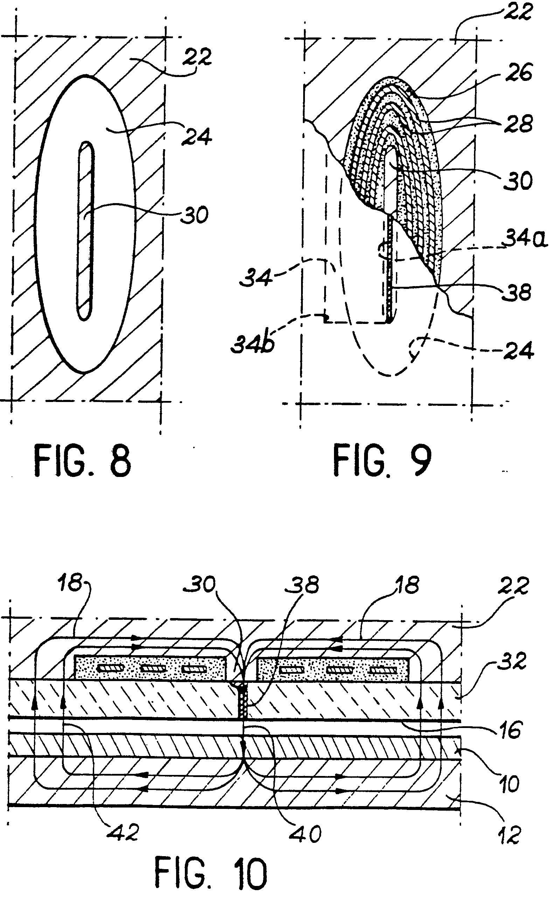

Selon le type de matériau choisi, la couche 22 est gravée soit chimiquement, soit par gravure ionique réactive. On obtient selon la figure 2, une tranchée 24 sensiblement elliptique ou ovale. La figure 8 montre cette tranchée en vue de dessus. Cette tranchée laisse intacte une partie centrale rectiligne 30. Un masque de résine défini par photolithographie est utilisé à cet effet. La profondeur de gravure peut atteindre, par exemple, la moitié de l'épaisseur de la couche 22.

La tranchée 24 est ensuite comblée par un matériau diélectrique 26 qui peut être de la silice, une résine organique ou un composé à base de $Si(OH)_4$ par exemple. Le résultat est représenté sur la figure 3.

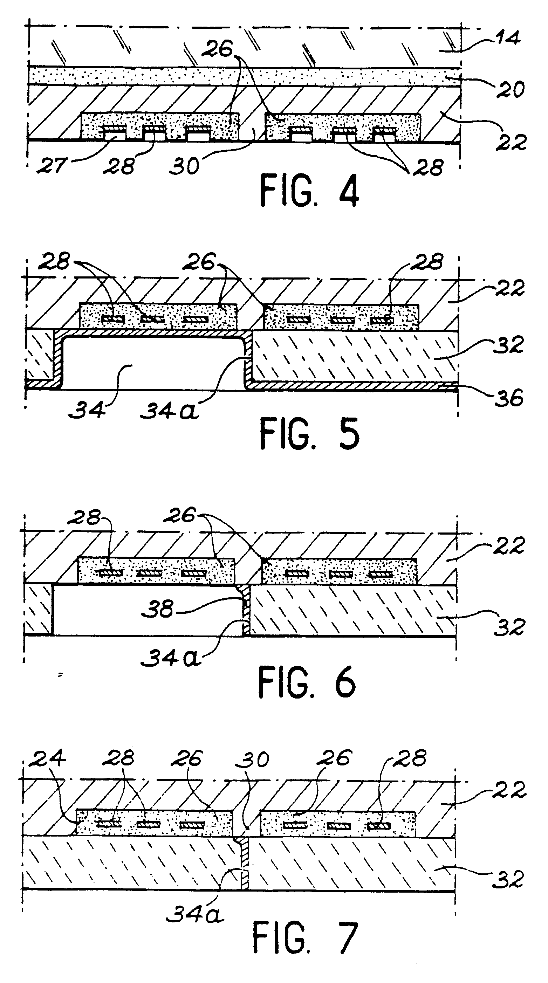

La figure 4 montre la gravure 27 du diélectrique 26. On peut opérer par gravure ionique réactive avec un masque de résine défini par photolithographie. La gravure, dont la figure 4 montre une section, a la forme d'un sillon de section rectangulaire 27 de forme spiralée, comme on le voit mieux sur la figure 9.

On dépose ensuite un conducteur électrique 28 au fond du sillon 27. Un bobinage spiralé est ainsi réalisé autour de la pièce polaire centrale 30.

Les entrées et les sorties du bobinage ne sont pas représentées car elles ne présentent aucune difficulté de réalisation.

Le sillon 27 est ensuite comblé par un matériau analogue au matériau 26.

Une couche diélectrique dure 32 est ensuite déposée sur l'ensemble (figure 5). Cette couche possède une épaisseur d'environ un à quelques microns. Elle est constituée d'alumine, de silice ou de tout autre matériau diélectrique dur susceptible d'assurer un bon interface mécanique avec la surface du disque magnétique d'enregistrement (non représenté sur la figure). Cette couche 32 sert, de plus, à l'isolement du bobinage 28.

La couche diélectrique dure 32 est gravée pour obtenir une tranchée 34 présentant une paroi plane 34a parallèle à l'axe de la partie centrale 30 et découvrant un peu plus de la moitié de ladite partie centrale 30.

Une couche magnétique 36 mince, d'épaisseur inférieure au micron, est ensuite déposée. Cette couche présente une forte aimantation et une forte perméabilité. Elle peut être choisie dans la même famille de matériaux que ceux de la couche 22.

Cette couche mince magnétique 36 est ensuite enlevée, sauf sur la paroi plane 34a, où elle forme une fine lamelle magnétique 38 (figure 6). Cette lamelle assure une continuité magnétique avec la pièce polaire centrale 30.

Enfin, la tranchée 34 est comblée par un matériau diélectrique dur qui peut être identique ou non à celui de la couche 32. La figure 7 montre le résultat obtenu.

La figure 9 montre une vue éclatée, en vue de dessus, de la tête. On y voit la tranchée 24, le bobinage spiralé 28, la tranchée rectiligne 34 avec sa paroi 34a et enfin la couche magnétique mince 38 déposée sur la paroi 34a.

La figure 10 montre une tête magnétique d'écriture-lecture pour enregistrement perpendiculaire, selon l'invention, face à un disque magnétique d'enregistrement. Ce dernier est constitué essentiellement d'une couche magnétique 10 à anisotropie perpendiculaire et d'une sous-couche 12 de fermeture de flux, à haute perméabilité.

A l'écriture, lorsque le bobinage 28 est parcouru par un courant, il engendre un flux magnétique qui est canalisé par la couche 22, se concentre dans la partie 30 et surtout dans la couche mince 38. Cette dernière, bien couplée avec la sous-couche 12, produit un champ d'écriture intense 40 qui enregistre les éléments d'information dans la couche 10.

Le flux de fermeture 42 est notablement réduit par rapport au flux principal 40 pour les deux raisons suivantes:

- la distance séparant les pôles de fermeture (couche 22) de la couche 12 est plus grande que celle séparant l'extrémité de la couche 38 de cette meme couche 12,
- la surface de fermeture de flux est très grande par rapport à la section de la couche 38.

De manière symétrique, à la lecture, le flux produit par la couche 10 suit le même chemin que celui qui servait à l'écriture. La variation de flux crée un courant induit dans l'enroulement 28 et une tension à ses bornes qui constitue le signal de lecture.

**Revendications**

1. Procédé de fabrication d'une tête magnétique d'écriture et de lecture pour enregistrement perpendiculaire, comportant les opérations suivantes:

- dépôt d'une couche (22) en matériau magnétique sur un support isolant (20),
- gravure dans la couche magnétique (22) d'une première tranchée (24) large, fermée, laissant intacte une partie centrale (30) allongée ayant un axe rectiligne,
- réalisation d'un bobinage (28) dans la tranchée (24), ce bobinage entourant la partie centrale (30) et étant isolé électriquement par une couche diélectrique (26),
- dépôt d'une couche d'un premier matériau diélectrique dur (32) sur le bobinage et la partie centrale,
- gravure dans cette couche (32) d'une seconde tranchée (34) comportant un bord latéral plan (34a) parallèle à l'axe de la partie centrale (30) et en regard de celui-ci, cette tranchée découvrant partiellement la partie centrale,
- dépôt, sur la couche en diélectrique dur (32) et dans la seconde tranchée (34) d'une couche magnétique mince (30),
- gravure de cette couche magnétique mince (36) pour ne laisser subsister que la partie déposée sur le bord latéral (34a) de la seconde tranchée,
- comblement de la seconde tranchée par un second matériau diélectrique dur semblable au premier (32).

2. Procédé selon la revendication 1, caractérisé en ce que la réalisation du bobinage (28) est obtenue par les étapes suivantes:

- comblement de la première tranchée (24) par la couche diélectrique (26),
- gravure ionique réactive de la couche diélectrique (26) de manière à obtenir un sillon spiralé entourant la partie centrale (30),
- dépôt d'un matériau conducteur dans ledit sillon spiralé,

- comblement du sillon spiralé.

## Patentansprüche

1. Herstellungsverfahren eines Schreib- und Lese-Magnetkopfes für senkrechte Aufzeichnung, umfassend folgende Schritte:

- Aufbringung einer Schicht (22) aus magnetischem Material auf einen Isolationsträger (20);
- Eingravieren eines ersten großen, geschlossenen Schnittes (24) in die magnetische Schicht (22), intaktlassend einen sich zentral erstreckenden Bereich (30), der eine geradlinige Achse besitzt;
- Vorsehen einer Wicklung (28) im Einschnitt (24), wobei diese Wicklung den zentralen Bereich (30) umgibt und durch eine dielektrische Schicht (26) elektrisch isoliert wird,
- Aufbringen einer Schicht eines ersten dielektrisch harten Materials (32) auf die Wicklung und den zentralen Bereich;
- Eingravieren in diesen Einschnitt (32) eines zweiten Einschnittes (34), der einen seitlichen ebenen Rand (34a) parallel zur Achse des zentralen Bereiches (30) besitzt und in Bezug zu diesem öffnet dieser Einschnitt teilweise den zentralen Bereich;
- Aufbringen einer dünnen magnetischen Schicht (36) auf die dielektrisch harte Schicht (32) und in den zweiten Einschnitt (34) hinein,
- Eingravieren der dünnen magnetischen Schicht (36), um den auf den seitlichen Rand (34a) des zweiten Einschnittes aufgetragenen Bereich nicht bestehen zu lassen;
- Ausfüllen des zweiten Einschnittes mit einem zweiten dielektrisch hartem Material, das dem ersten (32) gleich bzw. ähnlich ist.

2. Verfahren nach Anspruch 1, dadurch gekennzeichnet, daß das Vorsehen der Wicklung (28) durch folgende Stufen erhalten wird:

- Ausfüllen des ersten Einschnittes (24) durch die dielektrische Schicht (26);
- ionisch reaktives Eingravieren bzw. -schneiden der dielektrischen Schicht (26) derart, daß man eine spiralförmige Furche erhält, die den zentralen Bereich (30) umgibt;
- Aufbringen eines leitenden Materials in die genannte spiralförmige Furche;
- Ausfüllen der spiralförmigen Furche.

## Claims

1. Process for the production of a magnetic read-write head for perpendicular recording, comprising:

- depositing a film (22) of magnetic material on an insulating support (20), etching in said magnetic film (22) a first wide, closed channel (24), which leaves intact a central elongated portion (30) having a rectilinear axis,
- forming a coil (28) in the channel (24) surounding the central portion (30) and being electrically insulated by a dielectric layer (26),
- deposition of a coating of a first hard dielectric material (32) on the coil and the central portion,
- etching in said coating (32) a second channel (34) having a planar lateral edge (34a) parallel to the axis of the central portion (30) and facing the latter, said second channel partly exposing the central portion,
- depositing a thin magnetic film (36) on the hard dielectric layer (32) and in the second channel (34),
- etching said thin magnetic film (36) so as to only leave the part deposited on the lateral edge (34a) of the second channel and
- filling the latter with a second hard dielectric material similar to the first (32).

2. Process according to claim 1, characterized in that the coil (28) is obtained by the following stages:

- filling the first channel (24) with the dielectric layer (26),
- reactive ionic etching of the dielectric layer (26), so as to obtain a spiral groove surrounding the central portion (30),
- deposition of a conductive material in said spiral groove and
- filling the spiral groove.

FIG. 1

FIG. 2

FIG. 3

FIG. 4

FIG. 5

FIG. 6

FIG. 7

FIG. 8

FIG. 9

FIG. 10